# EUROPEAN PATENT APPLICATION

(11) **EP 2 883 841 A1**
(43) Date of publication of application: **17.06.2015**
(21) Application number: 13826209.2
(22) Date of filing: 26.07.2013
(51) Int. Cl.: C01G 53/04, C01G 51/04

(54) **JOINED STRUCTURE COMPRISING CUBE- OR QUADRATIC PRISM-SHAPED ROCK SALT-TYPE OXIDE NANOPARTICLE WITH FINE METAL PARTICLE, AND METHOD FOR PRODUCING SAME**

(30) Priority: 01.08.2012 JP 2012171339
(71) Applicant: National Institute Of Advanced Industrial Science, Tokyo 100-8921 (JP)
(72) Inventor: KOGA Kenji, Tsukuba-shi Ibaraki 305-8565 (JP); HIRASAWA Makoto, Tsukuba-shi Ibaraki 305-8564 (JP)
(74) Representative: Forstmeyer, Dietmar
(86) International application number: PCT/JP2013/070377
(87) International publication number: WO 2014/021230

(57) **Abstract**

The object is to provide a method of continuous gas-phase generation of a joined structure comprising a cube- or quadratic prism-shaped rock salt-type oxide nanoparticle and a metal nanoparticle, and having high crystallinity. The method is characterized in that alloy nanoparticles composed of a noble metal and a base metal so that a rock salt-type oxide is formable and having a particle size of 1 to 100 nm are generated in an inert gas and brought into contact with a hot oxidizing gas, while the nanoparticles are heated at a high temperature together with the inert gas, to oxidize a base metal component in the alloy nanoparticles floating in the gas, and to simultaneously allow phase separation of the metal component, whereby the joined structure comprising the cube- or quadratic prism-shaped rock salt-type oxide nanoparticle and the metal nanoparticle is obtained.

## Description

### TECHNICAL FIELD

The present invention relates to a joined structure comprising a rock salt-type oxide nanoparticle and a metal nanoparticle (hereinafter sometimes abbreviated as "joined structure," and in a number of cases referred to as "joined body," "composite structure," "joined nanoparticle," or "composite nanoparticle") that is potentially applicable to a catalyst, an electronic device, or the like, and to a method of generating the same with high purity, wherein the rock salt-type oxide nanoparticle part is characterized by having a nanocubic or nanorod-shape.

### BACKGROUND ART

An oxide exhibiting a rock salt (NaCl)-type structure (hereinafter abbreviated as "rock salt-type oxide") has long been known as a highly important substance group for industrial purposes. Rock salt-type oxides include single-metal oxides, such as NiO, CoO, MgO, TiO, FeO, VO, MnO, TaO, NbO, ZrO, CaO, BaO, SrO, CdO, EuO, and SmO, as well as many types of composite oxides. The rock salt-type oxide is an ionic crystal comprising a divalent (+2) metallic cation and a divalent (-2) oxygen anion. Its crystal structure is of the cubic system, and the crystal plane among the three low-index planes {100}, {111} and {110} most stably exposed at the surface is the {100} plane, which maintains electric charge neutrality. Only a metal ion or an oxygen ion is exposed on the {111} surface, and the surface is therefore the most unstable in terms of electric charge. The {110} surface has high surface energy, and is therefore incapable of being the most stable surface. The well-known fact that the cleavage plane of MgO crystal is the {100} plane is attributable to the aforesaid properties. Thus, unlike substances of any other crystal structure, the rock salt-type oxide exhibits high stability only on the {100} surface and is therefore the most promising substance group in terms of generating a cube-shaped or rectangular parallelepiped nanoparticle comprising the {100} surface. Non-Patent Literature (1) and Non-Patent Literature (2) suggest the possibility of stably forming cube- and quadratic prism-shaped nanoparticles in the case of NiO or CoO rock salt-type oxide.

### CITATION LIST

### PATENT LITERATURES

Patent Literature 1: US 2005/0167646 A1
Patent Literature 2: US 2010/0044209 A1
Patent Literature 3: US 2009/0088843 A1

### NON-PATENT LITERATURES

Non-Patent Literature 1: C.-N. Huang et al., J. Cryst. Growth, 305, 2007, 285-295.
Non-Patent Literature 2: D.-P. Chen et al., Cryst. Growth Des., 12, 2012, 2842-2849.
Non-Patent Literature 3: T. Mokari et al., Science, 304, 2004, 1787-1790.
Non-Patent Literature 4: T. Mokari et al., Nature Mater., 4, 2005, 855-863.
Non-Patent Literature 5: D. Steiner et al., Phys. Rev. Lett., 95, 2005, 056805-1-056805-4.
Non-Patent Literature 6: A. H. Khan et al., Chem. Comm., 47, 2011, 8421-8423.
Non-Patent Literature 7: M. T. Sheldon et al., Nano Lett., 9, 2009, 3676-3682.
Non-Patent Literature 8: L. Carbone et al., J. Mater. Chem., 16, 2006, 3952-3956.
Non-Patent Literature 9: P. D. Cozzoli and L. Manna, Nature Mater., 4, 2005, 801-802.

### SUMMARY OF INVENTION

### TECHNICAL PROBLEM

The greatest advantage of a nanoparticle having a cube shape (nanocube) or a quadratic prism shape (nanorod) is a very high probability that one plane among the six planes is situated in parallel with a substrate surface when the particle is deposited on a solid substrate. Thus, specific crystal planes of individual nanoparticles can be easily oriented on the substrate surface, merely by depositing the nanoparticles on the solid substrate surface, without performing any special external manipulation. This character is highly desirable for construction of various nanodevices. Moreover, surfaces of the particles tend to contact in parallel with each other, so that a regular array tends to occur, and the particles also have an advantage of achieving a larger packing fraction in comparison with a spherical shape. By taking advantage of such properties, different material-types of nanoparticles with cube- or quadratic prism-shape can be joined via specific crystal surfaces so as to be integrated and stacked. Such a stacking is highly promising in construction of a semiconductor nanodevices, for example.

Deposition of nanoparticles or clusters of a metal (a noble metal or a noble metal alloy) on the surfaces of the cube- or quadratic prism-shaped rock salt-type oxide nanoparticles is expected to enable development of new characteristics attributable to interaction with, or the heterojunction interface with, the metal nanoparticles. Such a nano-scale device is essential for construction of an integrated device by self-organization array control exploiting the advantages of the cube shape or the quadratic prism shape.

The metal nanoparticles attached to the surfaces of the rock salt-type oxide nanoparticles at the atomic level also function as electrodes. NiO and CoO are p-type semiconductors having holes as carriers and have the potential to be significantly useful as electrical junctions when arraying these cube- or quadratic prism-shaped semiconductor nanoparticles on a silicon or other semiconductor substrate, or when bonding the semiconductor nanoparticles with one another. For example, in Patent Literature (1) to (3) and Non-Patent Literature (3) to (8), pricise experiments were conducted on the electronic states of Au-CdSe, Au-CdS, or Au-PbS obtained by liquid-phase synthesis, and their results showed that nanostructures obtained by providing Au nanoelectrodes on a semiconductor nanorod of CdSe, CdS, PbS, or the like is highly promising for construction of next-generation photoelectron nanodevices and the like. Moreover, Non-Patent Literature (9) points out that one advantage of providing a Au nanoparticle on the tip of a semiconductor nanorod is that the semiconductor nanorod can be controlled and arranged in an arbitrary place on a solid substrate, by using an organic molecule that selectively bonds only to Au.

As explained above, development has been desired of a structure in which metal nanoparticles are attached to a surface of a cube- or quadratic prism-shaped rock salt-type oxide nanoparticle, and of a method of producing the structure. In order to apply the thus-created structures as catalysts or parts for construction of nano-scale devices, a generation method that achieves both high crystallinity and surface cleanliness is strongly desired.

Accordingly, the present invention is contemplated for providing a joined structure comprising a cube- or quadratic prism-shaped rock salt-type oxide nanoparticle and a metal nanoparticle, and having high crystallinity, and for providing a production method according to which the joined structure is continuously generated in a gas phase.

### SOLUTION TO PROBLEM

The present invention is based on a finding that a joined structure comprising a cube- or quadratic prism-shaped rock salt-type oxide nanoparticle and a metal nanoparticle, and having high crystallinity, can be obtained by generating, in an inert gas, alloy nanoparticles, composed of a noble metal, a base metal so that a rock salt-type oxide is formable, and inevitable impurities, and having a predetermined particle size, and while the nanoparticles are transported by the inert gas, heating and bringing the alloy nanoparticles into contact with an introduced oxidizing gas. The present invention also relates to the rock salt-type oxide nanoparticle having a cube shape (nanocube) or a quadratic prism shape (nanorod) to which the metal nanoparticle is joined, and a method of continuously generating the same in a gas phase.

The present invention has features as described below.
(1) A method of producing a joined structure comprising a cube- or quadratic prism-shaped rock salt-type oxide nanoparticle and a metal nanoparticle, comprising the steps of:
   generating, in an inert gas, an alloy nanoparticle, which contains 0.1 to 90 at.% of a noble metal, with the balance being a base metal and inevitable impurities, and which has a particle size of 1 to 100 nm; and
   heating the alloy nanoparticle and bringing it into contact with a hot oxidizing gas, while the alloy nanoparticle is transported by the inert gas, to oxidize a floating alloy nanoparticle and to allow phase separation into a noble metal-containing metal component and an oxidized base metal component, thereby obtaining the joined structure.
(2) The method of producing the joined structure according to the item (1), wherein the alloy nanoparticle further contains a doping element.
(3) The method of producing the joined structure according to the item (1) or (2), wherein the joined structure comprising the rock salt-type oxide nanoparticle and the metal nanoparticle is obtained in a dispersed state.
(4) The method of producing the joined structure according to any one of the items (1) to (3), wherein thermal oxidation treatment of the alloy nanoparticle is carried out in a gas phase, at a temperature of 600°C or higher and a treatment time not exceeding 10 seconds.
(5) The method of producing the joined structure according to any one of the items (1) to (4), wherein an oxidizing gas is introduced while the alloy nanoparticle is heated in the inert gas.
(6) The method of producing the joined structure according to any one of the items (1) to (5), wherein any one of a gas evaporation method, a laser ablation method, a sputtering method, an arc plasma method, and an atmospheric pressure plasma method is applied as a method of generating the alloy nanoparticle.
(7) The method of producing the joined structure according to any one of the items (1) to (6), wherein the base metal constituting the rock salt-type oxide is at least one selected from among Ni, Co, Mg, Ti, Fe, V, Mn, Ta, Nb, Zr, Ca, Ba, Sr, Cd, Eu, and Sm, and may further contain an element other than these base metals.
(8) The method of producing the joined structure according to any one of the items (1) to (7), wherein a metal component of the metal nanoparticle is at least one noble metal selected from among Au, Pt, Pd, Rh, Ag, Ru, and Ir, and may contain a base metal element.
(9) A joined structure, in which one or more metal nanoparticles each having a particle diameter of 1 to 50 nm are carried on a surface of a rock salt-type oxide nanoparticle having a cube shape measuring 1 to 100 nm on each side, or a quadratic prism shape measuring 1 to 100 nm on long-side length and having an aspect ratio of less than 10,
   wherein the rock salt-type oxide nanoparticle comprises as a base metal component of a rock salt-type oxide thereof at least one selected from among Ni, Co, Mg, Ti, Fe, V, Mn, Ta, Nb, Zr, Ca, Ba, Sr, Cd, Eu, and Sm, and may further contain an element other than these, and
   wherein the metal nanoparticle comprises as a metal component thereof at least one noble metal selected from among Au, Pt, Pd, Rh, Ag, Ru, and Ir, and may contain the base metal component of the rock salt-type oxide.
(10) The joined structure according to the item (9), wherein the rock salt-type oxide in the rock salt-type oxide nanoparticle is NiO or CoO, and wherein the noble metal in the metal nanoparticle is Au or Pt.

### ADVANTAGEOUS EFFECTS OF INVENTION

The present invention has a remarkable advantage in that it enables a cube- or quadratic prism-shaped rock salt-type oxide nanoparticle, or a joined nanoparticle having a noble metal or the like carried on the nanoparticle, to be simply generated in a gas phase. The thus-generated product is obtained in a significantly high purity state, and incorporates no impurities, such as reducing agent and organic substances inevitably present in liquid-phase synthesis, and thus needs no step of washing or burning such impurities. The feature of not needing such post-processing steps is highly significant, particularly from the viewpoint of stable generation of a catalyst sample.

The rock salt-type oxide nanoparticle obtained according to the present invention has an extremely sharp-cornered cube shape or quadratic prism shape, and also has very high crystallinity internally. Such structural perfection offers a most notable advantage for application of the nanoparticles of this shape.

### BRIEF DESCRIPTION OF DRAWINGS

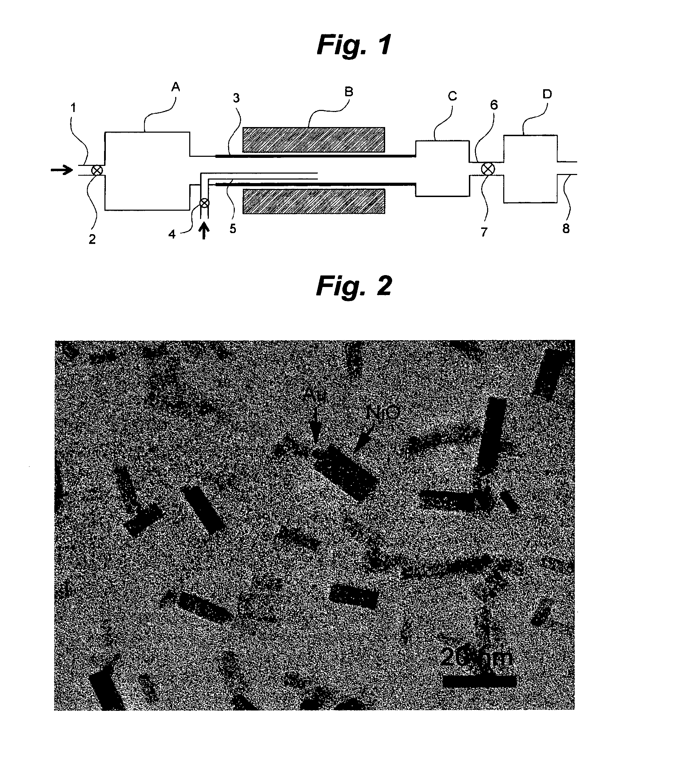

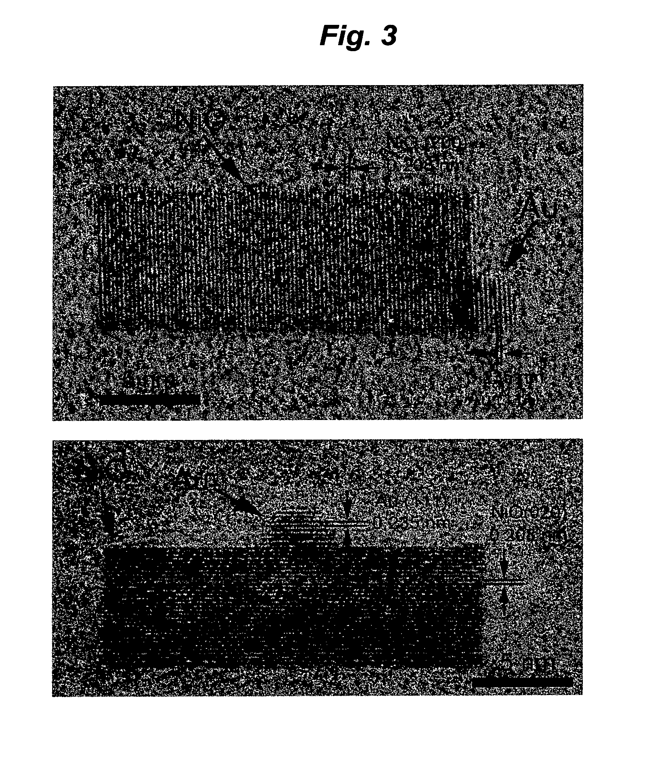

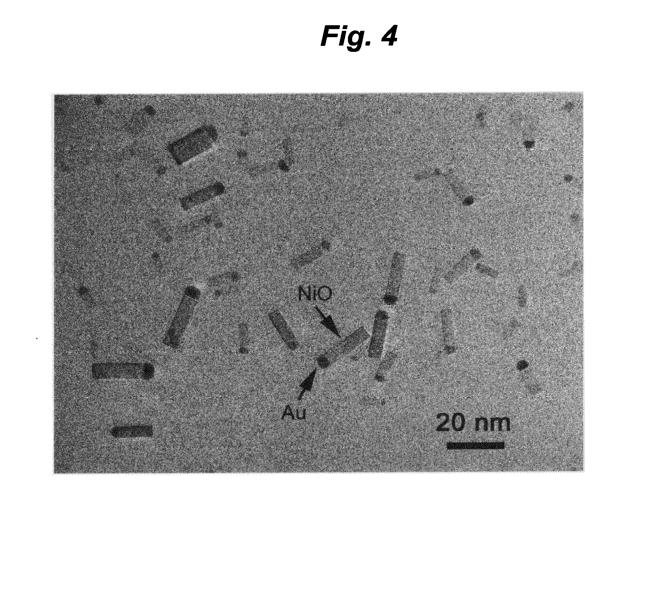

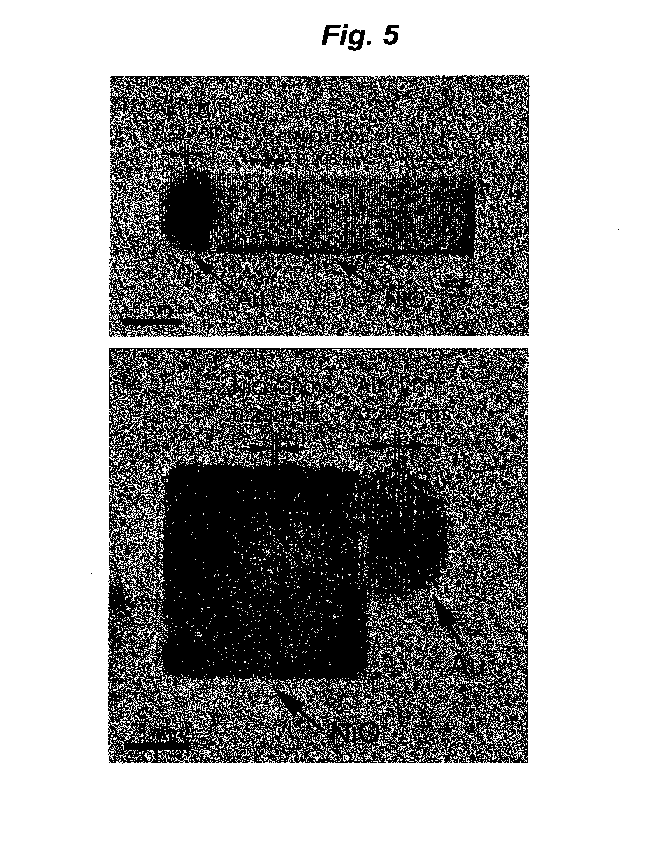

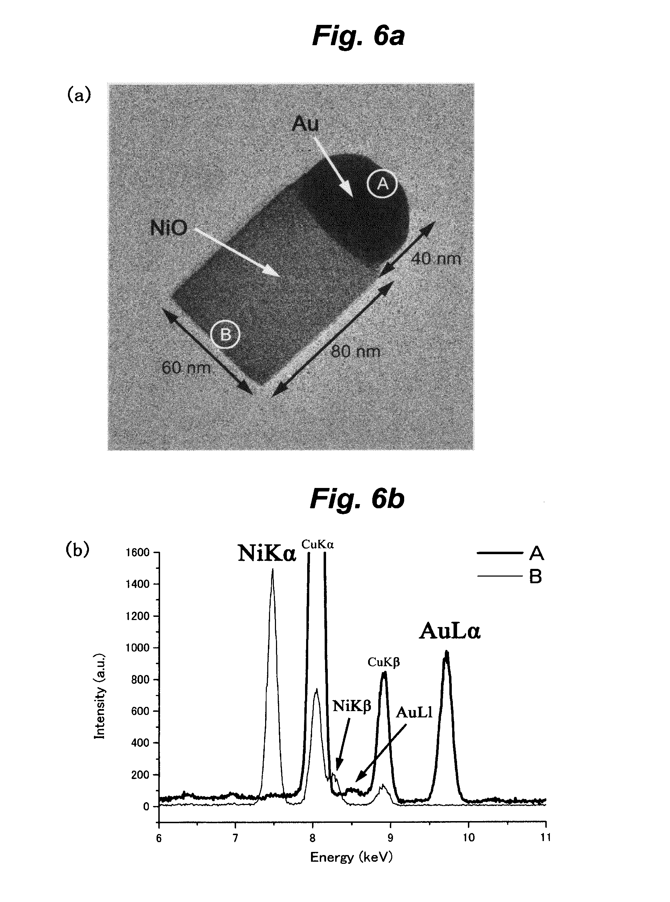

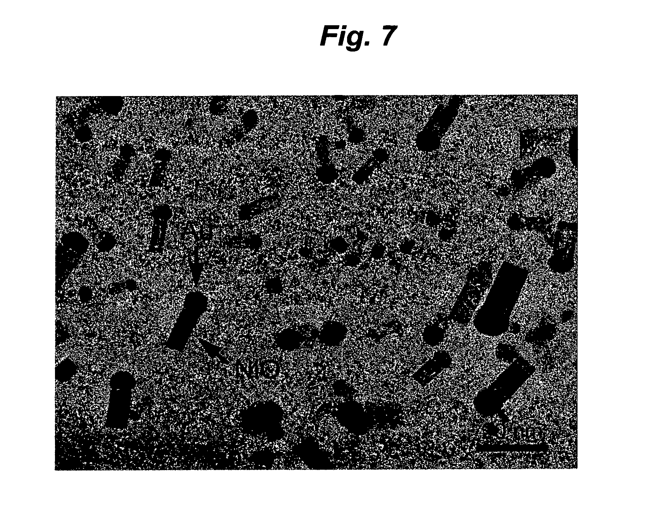

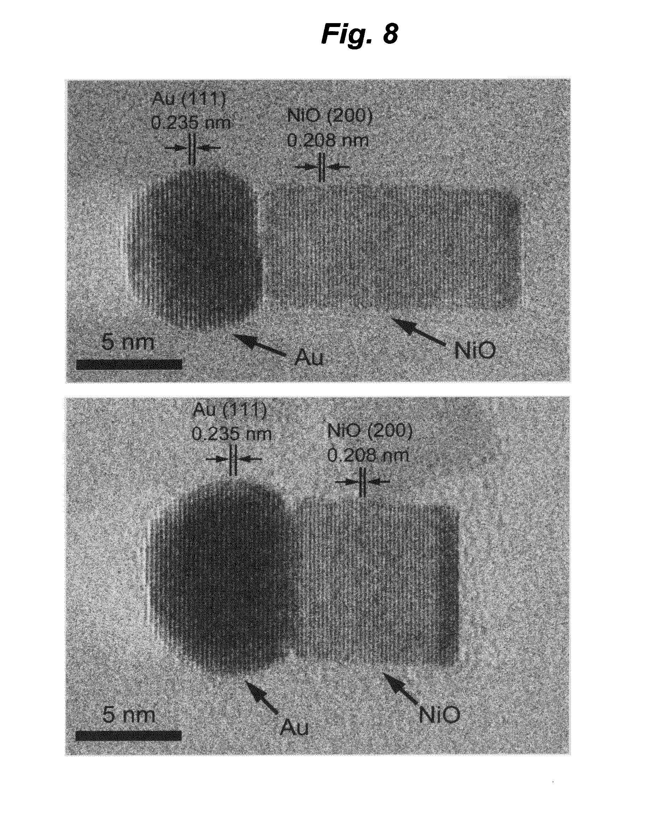

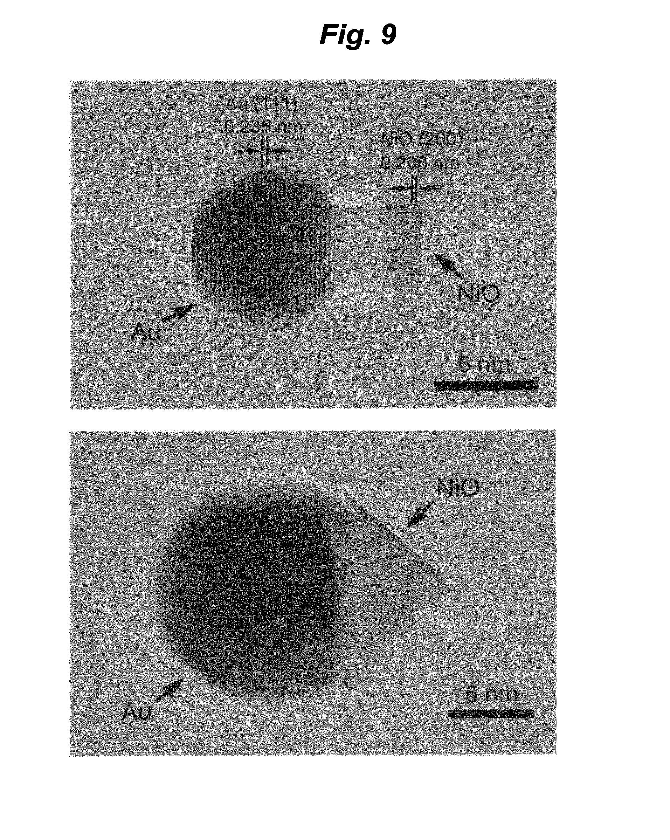

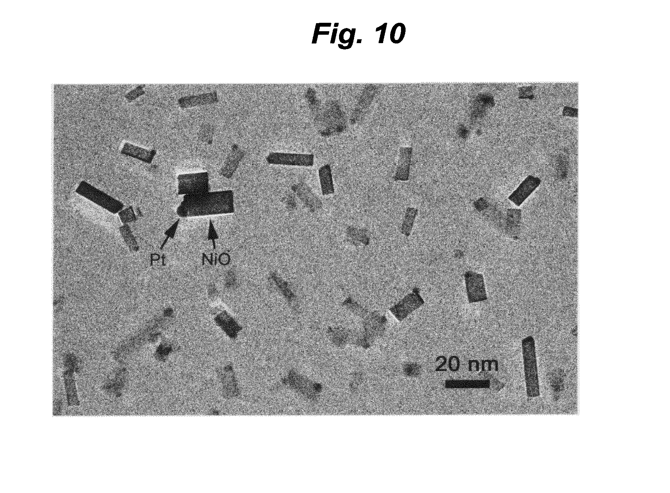

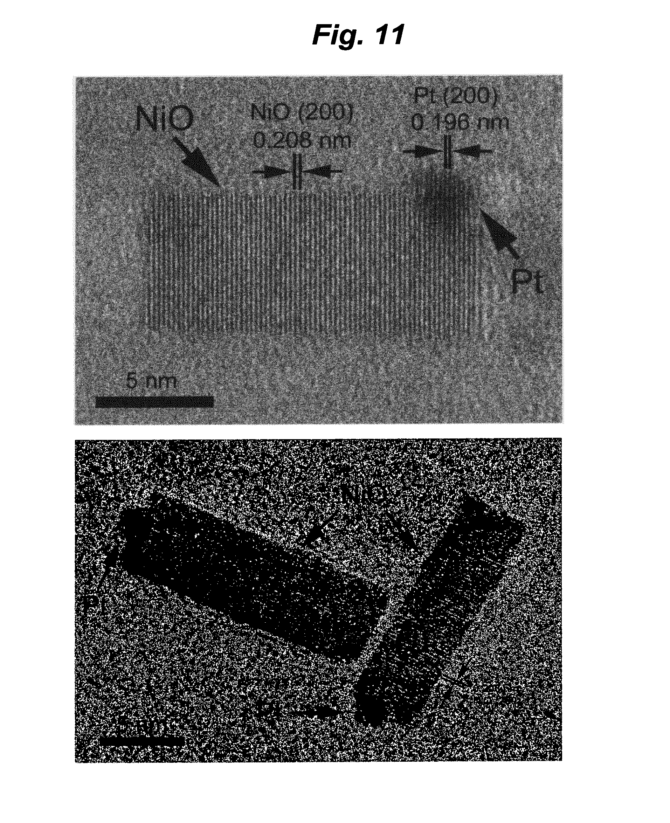

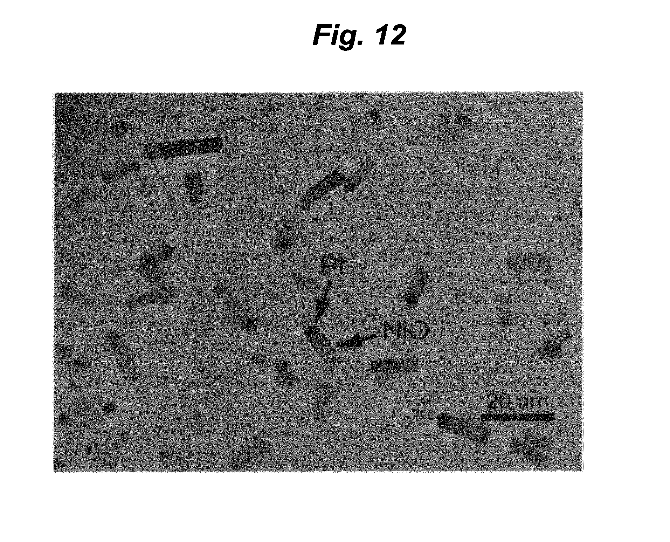

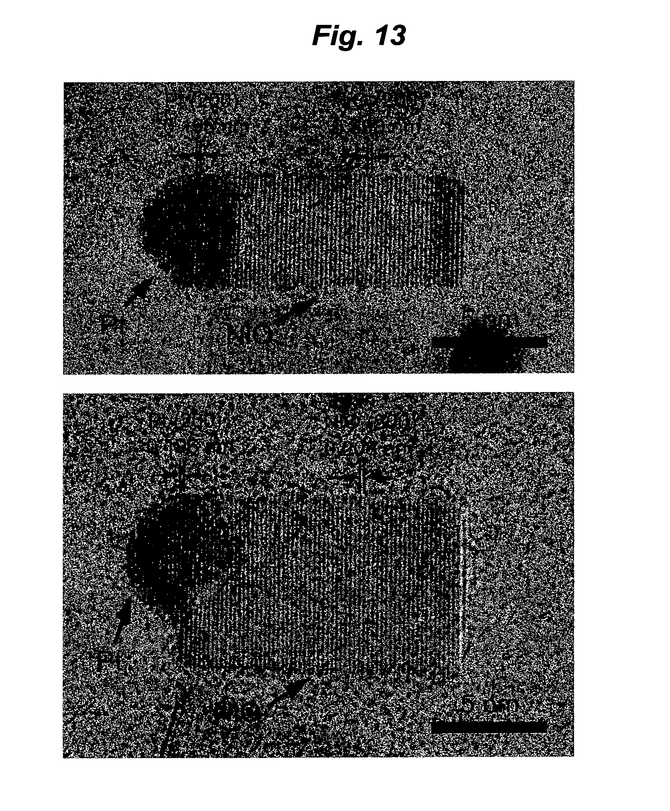

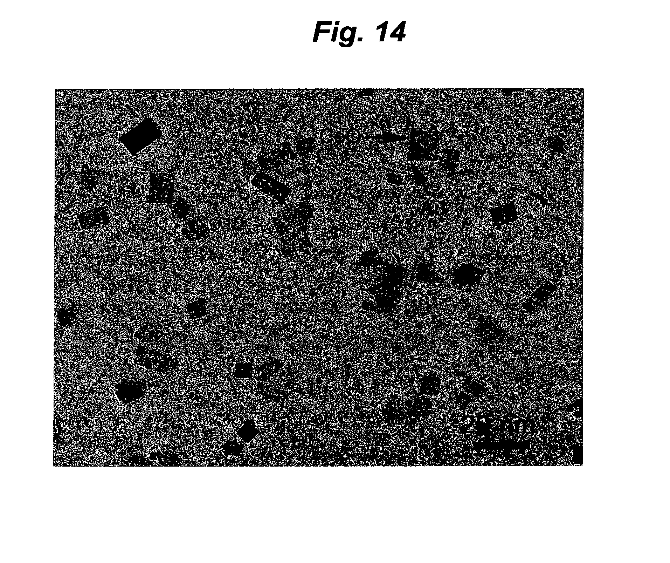

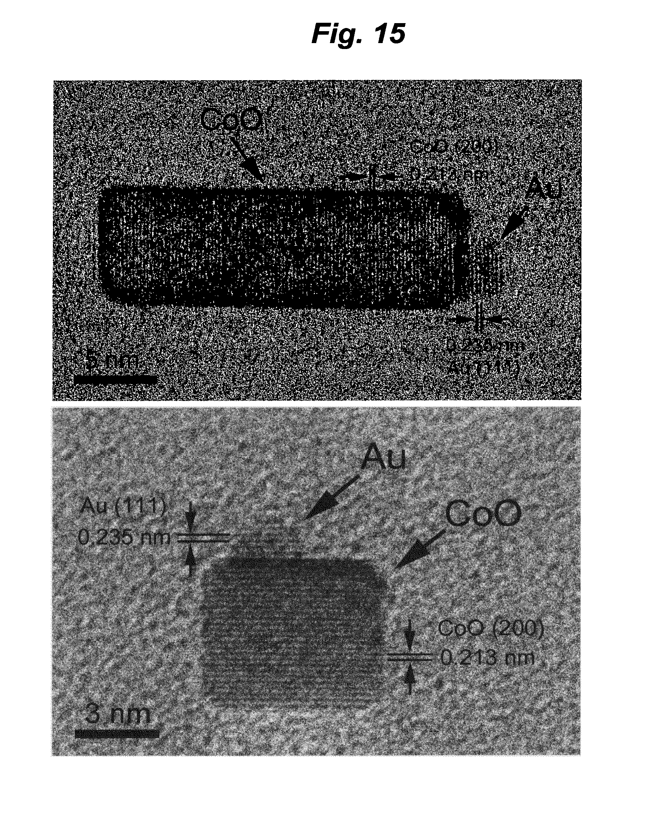

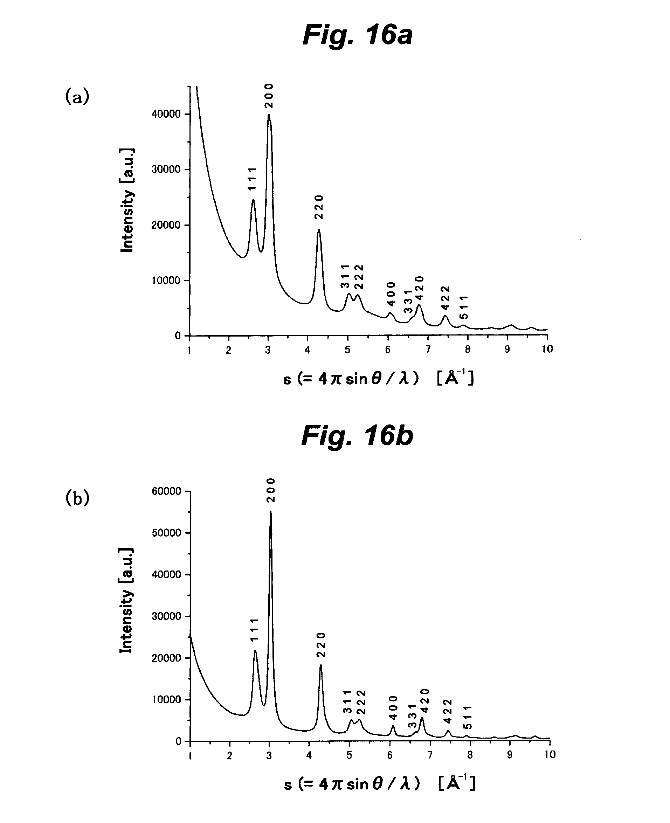

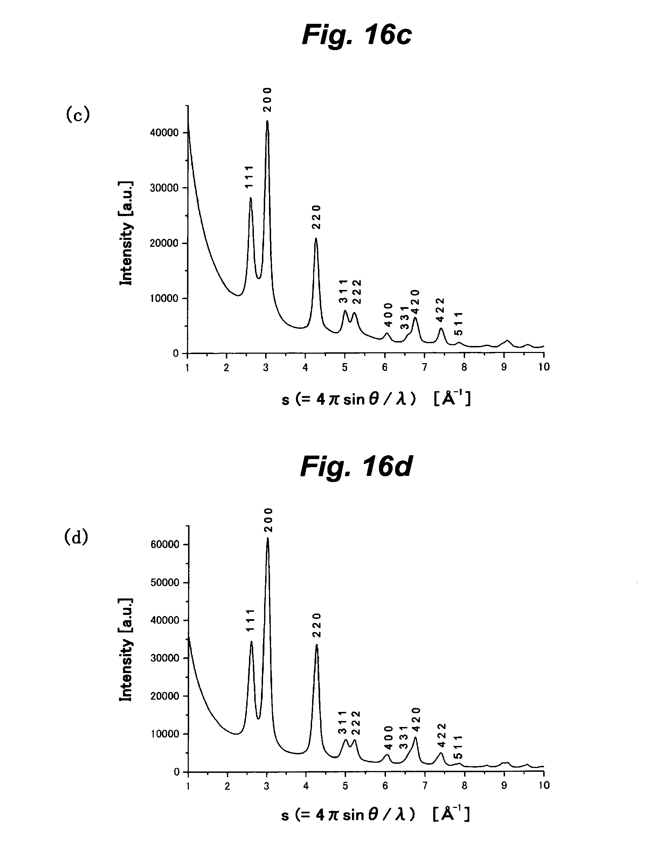

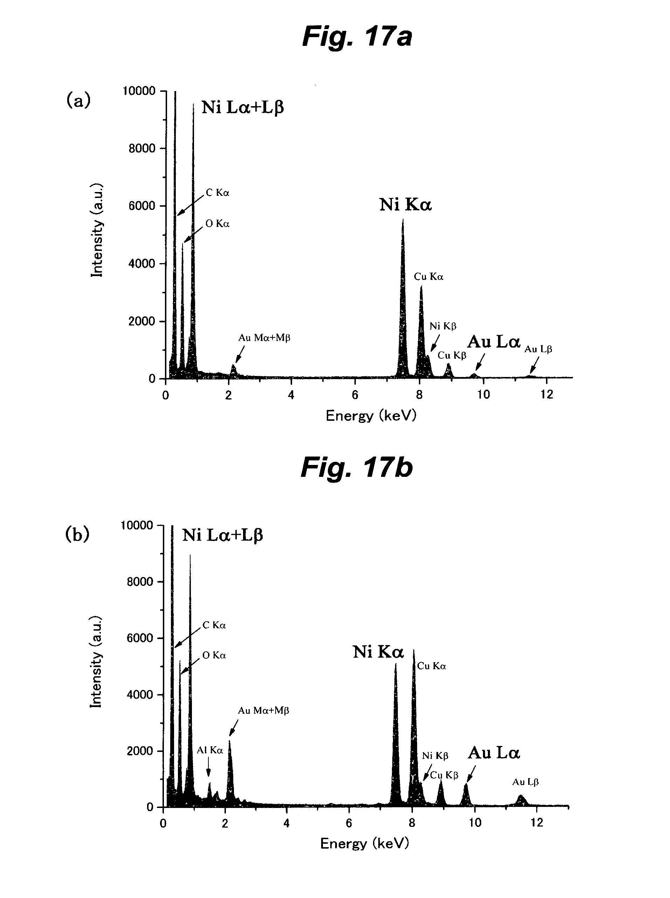

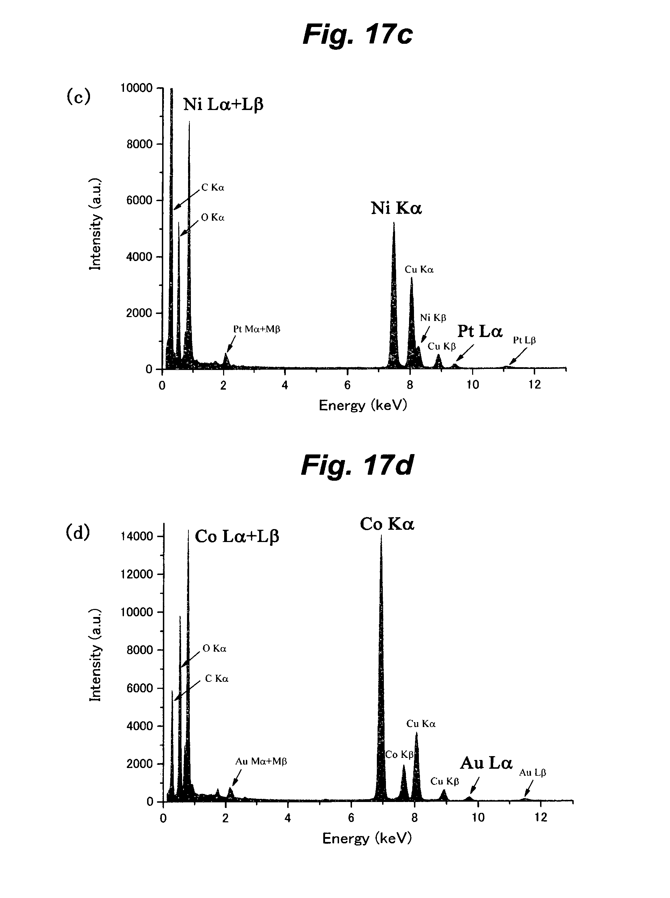

{Fig. 1}
   Fig. 1 is a drawing showing one example of a production apparatus that can be used in a method of producing a cube- or quadratic prism-shaped rock salt-type oxide nanoparticle of the present invention.
{Fig. 2}
   Fig. 2 shows a transmission electron microscope (TEM) photograph of a joined structure comprising a cube- or quadratic prism-shaped NiO nanoparticle and a Au nanoparticle, as obtained by carrying out, at 900°C, thermal oxidation treatment of an alloy nanoparticle generated from a Ni-5 at.% Au alloy pellet by laser ablation.
{Fig. 3}
   Fig. 3 shows a high-resolution TEM photograph of a joined structure comprising a quadratic prism-shaped NiO nanoparticle and a Au nanoparticle, as obtained by carrying out, at 900°C, thermal oxidation treatment of an alloy nanoparticle generated from a Ni-5 at.% Au alloy pellet by laser ablation.
{Fig. 4}
   Fig. 4 shows a TEM photograph of a joined structure comprising a cube-or quadratic prism-shaped NiO nanoparticle and a Au nanoparticle, as obtained by carrying out, at 900°C, thermal oxidation treatment of an alloy nanoparticle generated from a Ni-20 at.% Au alloy pellet by laser ablation.
{Fig. 5}
   Fig. 5 shows a high-resolution TEM photograph of a joined structure comprising a quadratic prism- or cube-shaped NiO nanoparticle and a Au nanoparticle, as obtained by carrying out, at 900°C, thermal oxidation treatment of an alloy nanoparticle generated from a Ni-20 at.% Au alloy pellet by laser ablation.
{Fig. 6a}
   Fig. 6a shows a TEM photograph of a joined structure comprising a quadratic prism-shaped NiO nanoparticle and a Au nanoparticle, as obtained by carrying out, at 900°C, thermal oxidation treatment of a droplet released from a surface of a Ni-20 at.% Au alloy target by laser ablation.
{Fig. 6b}
   Fig. 6b shows energy dispersive X-ray spectrometry data in A and B places in Fig. 6a showing the joined structure comprising the quadratic prism-shaped NiO nanoparticle and the Au nanoparticle, as obtained by carrying out, at 900°C, thermal oxidation treatment of a droplet released from the surface of the Ni-20 at.% Au alloy target by laser ablation.
{Fig. 7}
   Fig. 7 shows a TEM photograph of a joined structure comprising a cube-or quadratic prism-shaped NiO nanoparticle and a Au nanoparticle, as obtained by carrying out, at 900°C, thermal oxidation treatment of an alloy nanoparticle formed from a Ni-40 at.% Au alloy pellet by laser ablation.
{Fig. 8}
   Fig. 8 shows a high resolution TEM photograph of a joined structure comprising a quadratic prism- or cube-shaped NiO nanoparticle and a Au nanoparticle, as obtained by carrying out, at 900°C, thermal oxidation treatment of an alloy nanoparticle generated from a Ni-40 at.% Au alloy pellet by laser ablation.
{Fig. 9}
   Fig. 9 shows a high-resolution TEM photograph of a joined structure comprising a quadratic prism-shaped NiO nanoparticle and a Au nanoparticle, as obtained by carrying out, at 900°C, thermal oxidation treatment of an alloy nanoparticle formed from a Ni-80 at.% Au alloy pellet by laser ablation.
{Fig. 10}
   Fig. 10 shows a TEM photograph of a joined structure comprising a cube-or quadratic prism-shaped NiO nanoparticle with a Pt nanoparticle, as obtained by carrying out, at 900°C, thermal oxidation treatment of an alloy nanoparticle formed from a Ni-5 at.% Pt alloy pellet by laser ablation.
{Fig. 11}
   Fig. 11 shows a high-resolution TEM photograph of a joined structure comprising a quadratic prism-shaped NiO nanoparticle and a Pt nanoparticle, as obtained by carrying out, at 900°C, thermal oxidation treatment of an alloy nanoparticle formed from a Ni-5 at.% Pt alloy pellet by laser ablation.
{Fig. 12}
   Fig. 12 shows a TEM photograph of a joined structure comprising a cube-or quadratic prism-shaped NiO nanoparticle and a Pt nanoparticle, as obtained by carrying out, at 900°C, thermal oxidation treatment of an alloy nanoparticle formed from a Ni-20 at.% Pt alloy pellet by laser ablation.
{Fig. 13}
   Fig. 13 shows a high-resolution TEM photograph of a joined structure comprising a quadratic prism-shaped NiO nanoparticle and a Pt nanoparticle, as obtained by carrying out, at 900°C, thermal oxidation treatment of an alloy nanoparticle formed from a Ni-20 at.% Pt alloy pellet by laser ablation.
{Fig. 14}
   Fig. 14 shows a TEM photograph of a joined structure comprising a cube-or quadratic prism-shaped CoO nanoparticle an a Au nanoparticle, as obtained by carrying out, at 900°C, thermal oxidation treatment of an alloy nanoparticle formed from a Co-5 at.% Au alloy pellet by laser ablation.
{Fig. 15}
   Fig. 15 shows a high-resolution TEM photograph of a joined structure comprising a quadratic prism- or cube-shaped CoO nanoparticle and a Au nanoparticle, as obtained by carrying out, at 900°C, thermal oxidation treatment of an alloy nanoparticle formed from a Co-5 at.% Au alloy pellet by laser ablation.
{Fig. 16a}
   Fig. 16a shows a one-dimensional intensity profile derived from an electronic diffraction pattern of a joined structure comprising a cube- or quadratic prism-shaped NiO nanoparticle and a Au nanoparticle, as obtained by carrying out, at 900°C, thermal oxidation treatment of an alloy nanoparticle generated from a Ni-5 at.% Au alloy pellet by laser ablation.
{Fig. 16b}
   Fig. 16b shows a one-dimensional intensity profile derived from an electronic diffraction pattern of a joined structure comprising a cube- or quadratic prism-shaped NiO nanoparticle and a Au nanoparticle, as obtained by carrying out, at 900°C, thermal oxidation treatment of an alloy nanoparticle generated from a Ni-20 at.% Au alloy pellet by laser ablation.
{Fig. 16c}
   Fig. 16c shows a one-dimensional intensity profile derived from an electronic diffraction pattern of a joined structure comprising a cube- or quadratic prism-shaped NiO nanoparticle and a Pt nanoparticle, as obtained by carrying out, at 900°C, thermal oxidation treatment of an alloy nanoparticle generated from a Ni-5 at.% Pt alloy pellet by laser ablation.
{Fig. 16d}
   Fig. 16d shows a one-dimensional intensity profile derived from an electronic diffraction pattern of a joined structure comprising a cube- or quadratic prism-shaped CoO nanoparticle and a Au nanoparticle, as obtained by carrying out, at 900°C, thermal oxidation treatment of an alloy nanoparticle generated from a Co-5 at.% Au alloy pellet by laser ablation.
{Fig. 17a}
   Fig. 17a shows energy dispersive X-ray spectrometry data of a joined structure comprising a cube- or quadratic prism-shaped NiO nanoparticle and a Au nanoparticle, as obtained by carrying out, at 900°C, thermal oxidation treatment of an alloy nanoparticle generated from a Ni-5 at.% Au alloy pellet by laser ablation.
{Fig. 17b}
   Fig. 17b shows energy dispersive X-ray spectrometry data of a joined structure comprising a cube- or quadratic prism-shaped NiO nanoparticle and a Au nanoparticle, as obtained by carrying out, at 900°C, thermal oxidation treatment of an alloy nanoparticle generated from a Ni-20 at.% Au alloy pellet by laser ablation.
{Fig. 17c}
   Fig. 17c shows energy dispersive X-ray spectrometry data of a joined structure comprising a cube- or quadratic prism-shaped NiO nanoparticle and a Pt nanoparticle, as obtained by carrying out, at 900°C, thermal oxidation treatment of an alloy nanoparticle generated from a Ni-5 at.% Pt alloy pellet by laser ablation.
{Fig. 17d}
   Fig. 17d shows energy dispersive X-ray spectrometry data of a joined structure comprising a cube- or quadratic prism-shaped CoO nanoparticle and a Au nanoparticle, as obtained by carrying out, at 900°C, thermal oxidation treatment of an alloy nanoparticle generated from a Co-5 at.% Au alloy pellet by laser ablation.

### MODE FOR CARRYING OUT THE INVENTION

Embodiments of the present invention will be described below.

Fig. 1 shows an example of a production apparatus that can be used in a method of the present invention for producing a joined structure comprising a rock salt-type oxide nanoparticle and a metal nanoparticle. The method of producing the joined structure of the present invention includes: a step of generating, in an inert gas, an alloy nanoparticle, which consists of a noble metal, a base metal so that a rock salt-type oxide is formable, and inevitable impurities, and which has a particle size of 1 to 100 nm; and, a step of, while the alloy nanoparticles are transported by the inert gas, heating the alloy nanoparticles and bringing the nanoparticles into contact with an introduced oxidizing gas, to oxidize floating alloy nanoparticles, or the like.

In this production method, use of soluble compounds [for example, HAuCl₄, H₂PtCl₆, Ni(NO₃)₂, Co(NO₃)₂] is not required for metallic sources. Instead, the method can employ metals forming the alloy nanoparticles in the inert gas, wherein a base metal component comprises the rock salt-type oxide. Thus, unlike the liquid-phase synthesis which has restriction on the usable compound types, there is no limit in the sorts of metallic components, so that wide use of metals and noble metals is possible, even beyond the Ni, Co, Au, and Pt, used in Examples as described below.

One example of the apparatus to be used for carrying out this production method for producing the joined structure comprising the rock salt-type oxide nanoparticle and the metal nanoparticle is, as shown in Fig. 1, constituted by connecting in series a device for generating a raw alloy nanoparticle (A), a thermal oxidation reactor (B and 3), a collector (C), and an evacuating pump (D). The inert gas is introduced into the device for generating alloy nanoparticles (A), through a piping (1) and a flow control valve (2). The inert gas flows into a heating tube (3) heated at a predetermined temperature by a heater (B). The oxidizing gas is fed through a piping (5) by means of a flow control valve (4), expelled at near a center of a heating region inside the heating tube, and mixed with the inert gas. A mixed gas of the oxidizing gas and the inert gas passes through the collector (C), a piping (6), and a pressure control valve (7), and is exhausted by the evacuating pump (D). The alloy nanoparticles generated in a stream of the inert gas in the device for generating the alloy nanoparticles (A) flow into the heating tube (3), and are heated at the predetermined temperature. In a central portion of the heating tube (3), heated alloy nanoparticles are rapidly oxidized by a hot oxidizing gas of almost identical temperature and the like. The thus-oxidized alloy nanoparticles arrive at the collector (C), and are collected therein.

Pressure and gas flow rate inside the device (A) for generating the alloy nanoparticles and inside the heating tube (3) are controlled to optimum conditions by the flow control valve (2), the flow control valve (4) and the pressure control valve (7).

The metal composing the rock salt-type oxide, constituting the raw material, is not limited. For example, the metal can be constituted of at least one selected from Ni, Co, Mg, Ti, Fe, V, Mn, Ta, Nb, Zr, Ca, Ba, Sr, Cd, Eu, and Sm, and may contain an element other than these, for doping in a trace amount, within the range in which the rock salt-type crystal structure is formed.

The noble metal constituting the raw material is not limited. For example, the noble metal can be at least one selected from among Au, Pt, Pd, Rh, Ag, Ru, and Ir.

For the gas phase generation of the alloy nanoparticles which are served as the raw material, use can be made of the generation apparatus operable under a pressure range from a low pressure (for example, about 0.1 kPa to 10 kPa) up to about atmospheric pressure (101.3 kPa). For example, use can be made of an inert gas evaporation method, a laser ablation method, a sputtering method, an arc plasma method, and an atmospheric pressure plasma method, and in addition to these, various other methods for generating nanoparticles in a gas phase can also be appropriately used. An inert gas, such as helium, argon or nitrogen, is used to generate alloy nanoparticles having a size of about 1 nm to 100 nm (preferably 2 nm to 80 nm, and more preferably 5 nm to 60 nm). The particle size of the alloy nanoparticles generally increases as the temperature of the evaporation source (i.e. the energy input to the evaporation source) is higher, or as the pressure of the inert gas is higher and the flow rate is slower. Thus, the particle size can be appropriately controlled by checking the experiment results.

The alloy nanoparticles to be generated contain the noble metal in an amount of about 0.1 to 90 at.% (preferably 0.1 to 50 at.%, more preferably 1 to 30 at.%, further preferably 2 to 20 at.%, and still further preferably 3 to 10 at.%), and the balance is preferably formed of the base metal constituting the rock salt-type oxide, and inevitable impurities. However, with consideration to an application or a mode of use of the joined structure, the alloy nanoparticles can also appropriately contain a trace amount (2 at.% or less, preferably 1 at.% or less, and more preferably 0.5 at.% or less) of a different element, such as a doping element.

In the apparatus employing the laser ablation method for generating the alloy nanoparticles, it is possible to use a raw alloy material with the composition of the above-described alloy nanoparticles, because the composition of generated alloy nanoparticles is almost coincide with that of the raw alloy material. However, when the composition of the alloy nanoparticles is shifted from that of the raw material alloy, as in the gas evaporation method or the like, the noble metal content of the raw material alloy is preferably defined in consideration of vapor pressures or the like of the base metal and the noble metal. Moreover, in the case where alloying is possible during a process for generating the alloy nanoparticles, use of a raw material in an alloy state may not be necessary depending on the technique used to generate the alloy nanoparticles. For example, a material prepared by allowing the noble metal and the base metal to coexist, a material prepared by mixing powders of the noble metal and the base metal, or the like, can also be used as the raw material in the apparatus for generating the alloy nanoparticles.

Upon generating the alloy nanoparticles, when nano-sized secondary particles with forms of aggregated primary alloy particles are generated, before the raw material is subjected to thermal oxidation treatment in the thermal oxidation reactor (B and 3), the nanoparticle aggregates can be heated and sintered in an inert atmosphere, to form isolated and dispersed alloy nanoparticles, for example, by a preheating mechanism in the thermal oxidation reactor or a heating mechanism for post-treatment in the apparatus for generating the alloy nanoparticles (A). Moreover, target alloy nanoparticles can also be generated, by first generating elemental nanoparticles of each component metal, making them aggregated, and then sintering the nanoparticle aggregates using the heating mechanism or the like.

The thus-generated alloy nanoparticles are transported in the gas phase by the inert gas, and mixed with the hot oxidizing gas in the thermal oxidation reactor. As the oxidizing gas, use can be made, for example, of oxygen gas alone, or a mixture of air or oxygen gas with an inert gas or the like. The hot oxidizing gas needs to be expelled at a heating portion inside the thermal oxidation reactor (B and 3) to an inside of the heating tube (3). The oxidizing gas may be preheated before the gas is fed to the inside of the heating tube. However, if the feed piping (5) is installed a predetermined distance or more inside the heating tube, the preheating of the gas is not necessary, because the gas temperature can be raised to a high temperature on a level similar to the temperature inside the heating tube during flow through the piping.

When an oxidizing gas at room temperature is introduced at an upstream room-temperature region of the heating tube (3) and expelled to be mixed with the inert gas, the desired cube- or quadratic prism-shaped particles cannot be obtained.

The alloy nanoparticles in the thermal oxidation reactor can be indirectly heated with the inert gas heated to a high temperature, using, for example, a tubular electric furnace equipped with a quartz tube as a furnace core tube, or alternatively the nanoparticles can be directly heated, using induction heating, microwave heating, or the like.

Although the thermal oxidation treatment is depending on the gas pressure and the flow rate, and the type of metal, the treatment can generally be carried out under a temperature of 600°C or higher (preferably 700 to 1,200°C, and more preferably 800 to 1,100°C), and a treatment time of 0.001 to 30 seconds (preferably 0.002 to 10 seconds, and more preferably 0.005 to 5 seconds). When the treatment temperature is raised, the treatment time can be shortened. In the thermal oxidation reactor, the heating zone is configured along the transportation path of the alloy nanoparticles, so that the alloy nanoparticles can be heated within such a treatment time.

The joined structure comprising the rock salt-type oxide nanoparticle and the metal nanoparticle flowing out of the thermal oxidation reactor is cooled down to around ordinary temperature by natural cooling or appropriate cooling means, and then collected in the collector. As the collecting method, use can be appropriately made of any dry method or wet method used in aerosol collection techniques.

In the above-described process, in order to thermally oxidize the alloy nanoparticles in the gas phase, an oxygen concentration in the mixed gas of the oxidizing gas and the inert gas is preferably 0.1 % or more (more preferably 5% or more, and further preferably 10% or more).

In addition, the metal remained after the rock salt-type oxide is phase-separated forms a metal nanoparticle of an alloy with a lower base metal content than the original alloy nanoparticle, or a metal nanoparticle of an almost pure noble metal that hardly contains the base metal. The above condition depends on the amount of noble metal component in the raw material alloy, the degree of thermal oxidation treatment, and the like. For example, when the amount of noble metal component is larger than a predetermined amount, although the level thereof depends also on thermal oxidation treatment conditions, in some cases a base metal component that is not oxidized remains to form a metal nanoparticle of an alloy of remaining base metal and the noble metal. The metal nanoparticles desirably have as low impurity content as possible in order to produce composite nanoparticles for a catalyst or the like, but can contain an impurity originated from an impurity in the raw metal material or the like. The raw material is desirably selected such that the content of the impurity falls within the range (for example, less than 0.01 at.%, and preferably less than 0.001 at.%) in which a function of the catalyst or the like is not adversely affected to a major extent.

The joined structure comprising the rock salt-type oxide nanoparticle and the metal nanoparticle of the present invention is continuously produced in a significantly clean state according to the steps as described above.

The rock salt-type oxide nanoparticle constituting one component of the joined structure has a cube shape measuring 1 to 100 nm on each side, or a quadratic prism shape measuring 1 to 100 nm on long-side length, and an aspect ratio of less than 10. The length of the side or the aspect ratio as described above can be set up in various ways, according to the application and the mode of use of the joined structure, or the like, to fall in a side length range of, for example, 2 to 50 nm, 5 to 30 nm, 10 to 50 nm, 20 to 80 nm, 30 to 70 nm, or 50 to 100 nm, and an aspect ratio of, for example, 1.2 to 5, 2 to 7, or 1.5 to 3. The rock salt-type oxide in the rock salt-type oxide nanoparticles contains at least one selected from among Ni, Co, Mg, Ti, Fe, V, Mn, Ta, Nb, Zr, Ca, Ba, Sr, Cd, Eu, and Sm, one of which forms the rock salt-type oxide, and may be an oxide of one base metal, or a composite oxide of two or more base metals. Herein, the second or more additional base metal element composing the composite oxide may include an element (element that does not independently form the rock salt-type oxide) other than the above-described element, as long as the composite oxide forms the rock salt-type structure (here, elements with a content of 2 at.% or less for the doping element or the like, as described below, are excluded). As long as the rock salt-type oxide nanoparticles form the rock salt-type structure, the nanoparticles may contain different elements, such as the doping elements, in an amount of 2 at.% or less (preferably 1 at.% or less, and more preferably 0.5 at.% or less) in addition to the oxides of these base metals.

About the metal nanoparticle as the another component of the joined structure, one metal nanoparticle is usually joined to one rock salt-type oxide nanoparticle, but the joined structure in which two or more metal nanoparticles are joined can also be obtained by controlling the production conditions. The metal nanoparticle has a particle size of 1 to 50 nm, and contains noble metal(s), as the main metal component(s), selected from among Au, Pt, Pd, Rh, Ag, Ru, and Ir, and may contain only one noble metal or may be an alloy of two or more noble metals. The metal nanoparticle may be an alloy containing the base metal component in the above-described rock salt-type oxide, in addition to the noble metal(s).

The junction state of the joined structure of the present invention can be identified by observations using a high resolution TEM or the like. As is observed in the photographs in Examples described below, heterojunction states that can be identified by observations using the high resolution TEM include an arrangement in which a specific crystal plane of the metal nanoparticle lies in parallel to a {100} plane of the rock salt-type oxide nanoparticle, or in which connection is through an interface between lattice fringes of the two particles. Moreover, the junction state may vary largely depending on the materials, composition ratios, and the like.

In the present invention, the "particle size" is defined as the average value of largest and smallest diameters measured through the gravitational center of the particle (alloy nanoparticles, metal nanoparticles) in an image obtained by TEM observation.

### EXAMPLES

Hereafter, the present invention will be more specifically described by way of Examples, but the invention is not intended to be limited by these Examples, and various adjustments in the setting or modifications in design can be made to the extent that the gist of the present invention is maintained.

### (Example 1: Production of joined structure comprising nanocubic or nanorod-shaped NiO nanoparticle and Au nanoparticle)

### (Example 1-1: example using Ni-5 at.% Au alloy pellet)

As an apparatus for generating alloy nanoparticles, a generation apparatus using a laser ablation method was used. Helium was supplied at an inlet rate of 0.5 L/min into the apparatus, and the pressure inside the apparatus was maintained at a reduced pressure of 1.6 kPa using an oil rotary pump. A Ni-5 at.% Au alloy pellet (purity 99.9%, 20 mmϕ × 5 mmt) were used as a raw material target, and, a second harmonic (wavelength: 532 nm, output: 90 mJ/pulse, repeat frequency: 10Hz) of a Nd:YAG laser was focused and irradiated onto a surface thereof to instantaneously evaporate the target surface, whereby an aggregate of Ni-Au alloy nanoparticles was generated in the helium gas. While the thus-generated aggregate of Ni-Au alloy nanoparticles moved with a stream of the helium gas, the aggregate was sintered by a preheating mechanism (900°C) inside the generation apparatus, and thus isolated and dispersed Ni-Au alloy nanoparticles (particle size about 1 to 10 nm) were formed and conveyed into a heating tube (quartz tube, outer shape 18 mmϕ, inner diameter 15 mmϕ) in a thermal oxidation reactor. An oxygen gas was fed through an oxygen-introduction tube (outer shape 6 mmϕ, inner diameter 4 mmϕ) installed inside the heating tube to a hot region inside the heating tube at an inlet rate of 0.25 L/min (oxygen concentration in a mixed gas 33%). The Ni-Au alloy nanoparticles were oxidized with the hot oxygen, to form NiO nanoparticles joined with Au nanoparticles. The thermal oxidation treatment time was about 0.01 second. The thus-generated NiO nanoparticles joined with the Au nanoparticles were naturally deposited scarcely on an amorphous carbon membrane set inside the collector, to form a sample for TEM observation.

Fig. 2 shows a TEM photograph of a joined structure comprising a NiO nanoparticle and a Au nanoparticle. A great number of quadratic prism-shaped NiO nanoparticles can be observed on the amorphous carbon membrane. An image can be observed in which one small Au nanoparticle was adhered on a surface of each quadratic prism-shaped NiO nanoparticle. Fig. 3 shows a high resolution TEM photograph of a Au-NiO joined structure. In the example of this photograph, a hemispherical Au nanoparticle was joined on a bottom or side of the quadratic prism-shaped NiO nanoparticle. In both cases, a NiO (100) plane and a Au (111) plane were subjected to heterojunction in parallel with each other.

Fig. 16(a) shows a one-dimensional intensity profile derived from an electron diffraction pattern of the sample in Fig. 2. The horizontal axis represents a scattering vector s (4πsinθ/λ, 2θ: diffraction angle, λ: wavelength of an electron accelerated at 200 kV: 0.02508 A). The positions of the peaks that appeared coincided with the Miller's indices in the drawing, and the sample was identified to be NiO having rock salt-type structure. In addition, no electron diffraction peak from a fine Au nanoparticle, as observed in Fig. 3, was clearly confirmable. The reasons are that positions at which the Au peaks appeared were very close to the NiO peak positions, and the peak intensity of NiO was relatively strong due to the relatively small ratio of the Au content.

Fig. 17(a) shows results of composition analysis of particles in the sample in Fig. 2 by energy dispersive X-ray spectrometry. The carbon C in the data is due to the amorphous carbon membrane used for collecting particles and observation thereof. The Cu in the data is due to the Cu mesh on which the amorphous carbon membrane was attached. When these materials were excluded, only Ni and Au were detected as the metal components. By conversion from integrated values of Ni Kα and Au Lα, concentration of Au was found to be 3.8 at.%. This concentration substantially corresponded to the concentration of Au in the raw alloy pellet.

### (Example 1-2: example using Ni-20 at.% Au alloy pellet)

Generation of a joined structure comprising a Au nanoparticle and a NiO nanoparticle was undertaken, using a Ni-20 at.% Au alloy pellet (purity 99.95%, 19 mmϕ × 4 mmt) as a target. All experimental conditions were identical to Example 1-1, except for the alloy pellets. Fig. 4 shows a TEM photograph of a joined structure. Quadratic prism-shaped NiO was mainly formed, and an image can be observed in which one hemispherical Au nanoparticle was adhered on each quadratic prism-shaped base plane as the joining plane. Fig. 5 shows a high resolution TEM photograph of a joined structure comprising a quadratic prism-shaped NiO nanoparticle and a Au nanoparticle, and a joined structure comprising a cube-shaped NiO nanoparticle and a Au nanoparticle. In the similar situation to Fig. 3, a NiO (100) plane and a Au (111) plane were subjected to heterojunction in parallel with each other. From the results of electron diffraction in Fig. 16(b), NiO was identified to have the rock salt-type structure. As a result of composition analysis of particles by energy dispersive X-ray spectrometry in Fig. 17(b), only Ni and Au were detected as the metal components, and the concentration of Au was 19.7 at.%. This corresponded to the concentration of Au in the raw alloy pellet. In addition, a trace amount of Al was detected, which was due to scattering from a sample holder and the like.

In laser ablation, an outermost surface of the target was in a molten state, and a process, such as bumping (explosive boiling) in a molten layer, is known to generate coarse particles (droplets) in submicron to micron sizes. In samples obtained in Example 1-2, there were also coarse joined nanoparticles which were formed presumably by oxidation of droplets produced through this process. Fig. 6(a) shows a TEM photograph of a particle formed by oxidization of such an alloy droplet, showing a joined structure in which one hemisphere of Au was joined on a surface of quadratic prism-shaped NiO measuring 80 nm in long-side length. A composition analysis of this particle by energy dispersive X-ray spectrometry revealed a Au concentration in the metal component of 33.1 at.%, namely, an increase in the Au concentration was observed in comparison with the raw material concentration. When an analysis was performed to a tip (A part) of the hemispherical part showing high contrast in Fig. 6(a) by irradiating with an electron beam having 14 nmϕ of a full-width at a half maximum of intensity, as shown in a thick line in Fig. 6(b), no Ni was detected, and only Au was detected. Moreover, when an another analysis was performed to an end (B part) of a quadratic prism portion having low contrast in Fig. 6(a) in a similar manner, as shown in a thin line in Fig. 6(b), no Au was detected, and Ni was detected. The Cu signal here was due to a Cu mesh on which the amorphous carbon membrane was attached. From the results described above, also for such large particles, a joined structure comprising Au with NiO was found to be well formed.

### (Example 1-3: example using Ni-40 at.% Au alloy pellet)

Generation of a joined structure comprising a Au nanoparticle and a NiO nanoparticle was undertaken, using a Ni-40 at.% Au alloy pellet (purity 99.95%, 19 mmϕ × 4 mmt) as a target. Experimental conditions were substantially identical with the conditions in Example 1-1, except for the alloy pellet, but a preheating mechanism (900°C) used for a process of sintering the aggregate was installed outside the apparatus for generating the particles. Fig. 7 shows a TEM photograph of a joined structure. Quadratic prism-shaped NiO was mainly formed, and an image can be observed in which one hemispherical Au nanoparticle was adhered on each quadratic prism-shaped base plane as the joining plane. Fig. 8 shows a high resolution TEM photograph of a joined structure comprising a quadratic prism-shaped NiO nanoparticle and a Au nanoparticle, and a joined structure comprising a cube-shaped NiO nanoparticle and a Au nanoparticle. Similarly to Fig. 3 and Fig. 5, a NiO (100) plane and a Au (111) plane were subjected to heterojunction. As a result of composition analysis of the particles by energy dispersive X-ray spectrometry, concentration of Au in constituent metal elements was found to be 40.7 at.%. This substantially corresponded to the concentration of Au in the raw alloy pellet.

### (Example 1-4: example using Ni-80 at.% Au alloy pellet)

Generation of a joined structure comprising a Au nanoparticle and a NiO nanoparticle was undertaken, using a Ni-80 at.% Au alloy pellet (purity 99.95%, 16 mmϕ x3 mmt) as a target. Experimental conditions were identical with the conditions in Example 1-3, except for the alloy pellet. Fig. 9 shows a high resolution TEM photograph of a joined structure comprising a cube-shaped NiO nanoparticle and a Au nanoparticle. Composition analysis of the particles by energy dispersive X-ray spectrometry showed the concentration of Au in the constituent metal element to be 83.3 at.%. This was close to the concentration of Au in the raw alloy pellet.

### (Example 2: production of joined structure of nanocubic or nanorod-shaped NiO nanoparticle and Pt nanoparticle)

### (Example 2-1: example using Ni-5 at.% Pt alloy pellet)

Generation of a joined structure comprising a Pt nanoparticle and a NiO nanoparticle was undertaken, using a Ni-5 at.% Pt alloy pellet (purity 99.9%, 20 mmϕ × 5 mmt) as a target. All experimental conditions were identical to Example 1-1, except for the alloy pellet. Fig. 10 shows a TEM photograph of a joined structure. An image can be observed in which one small Pt nanoparticle was adhered on a surface of each quadratic prism- or cube-shaped NiO nanoparticle. Fig. 11 shows a high resolution TEM photograph of a joined structure. Lattice fringes of NiO and Pt joined in alignment, and thus both phases were found to be favorably subjected to heterojunction. From the results of electron diffraction in Fig. 16(c), NiO was identified to have the rock salt-type structure. As shown in Fig.17(c), composition analysis of particles by energy dispersive X-ray spectrometry detected only Ni and Pt as the metal components, and the concentration of Pt was 3.9 at.%. This substantially corresponded to the concentration of Pt in the raw alloy pellet.

### (Example 2-2: example using Ni-20 at.% Pt alloy pellet)

Generation of a joined structure comprising a Pt nanoparticle and a NiO nanoparticle was undertaken, using a Ni-20 at.% Pt alloy pellet (purity 99.95%, 17 mmϕ × 4 mmt) as a target. All experimental conditions were identical to Example 1-3, except for the alloy pellet. Fig. 12 shows a TEM photograph of a joined structure. Quadratic prism-shaped NiO was mainly formed, and an image can be observed in which one Pt nanoparticle was adhered on each quadratic prism-shaped NiO. Fig. 13 shows a high resolution TEM photograph of a joined structure comprising a quadratic prism-shaped NiO nanoparticle and a Pt nanoparticle. Composition analysis of particles by energy dispersive X-ray spectrometry showed the concentration of Pt in the constituent metal element to be 24.1 at.%. This was slightly larger than the value of the concentration of Pt in the raw alloy pellet.

### (Example 3: production of joined structure of nanocubic or nanorod-shaped CoO nanoparticle and Au nanoparticle)

Generation of a joined structure comprising a Au nanoparticle and a CoO nanoparticle was undertaken, using a Co-5 at.% Au alloy pellet (purity 99.9%, 20 mmϕ × 5 mmt) as a target. All experimental conditions were identical to Example 1-1, except for the alloy pellet. Fig. 14 shows a TEM photograph of a joined structure. An image can be observed in which one small Au nanoparticle was adhered on a surface of each quadratic prism- or cube-shaped CoO nanoparticle. Fig. 15 shows a high resolution TEM photograph of a joined structure. Similarly to in Example 1, CoO (100) and Au (111) were aligned in parallel, and both phases were found to be favorably subjected to heterojunction. From the result of electron diffraction in Fig. 16(d), CoO was identified to have the rock salt-type structure. As shown in Fig. 17(d), composition analysis of particles by energy dispersive X-ray spectrometry detected only Co and Au as the metal components, and concentration of Au was 2.2 at.%. This was slightly smaller than the concentration of Au in the raw alloy pellet.

### INDUSTRIAL APPLICABILITY

The present invention relates to a joined structure comprising a rock salt-type oxide nanoparticle and a metal nanoparticle, and to a method of generating the same with high purity, in which the rock salt-type oxide nanoparticle has a cube shape or a quadratic prism shape, and also has high crystallinity. NiO and CoO are p-type semiconductors with lower ratios of metal ions than the stoichiometric ratio. The present invention can provide a joined structure, in which nanoparticles of the p-type semiconductor NiO or CoO are established to have a cube or quadratic prism shape, and in which a metal nanoparticle is joined onto the surface of each NiO or CoO nanoparticle. Cube-shaped or quadratic prism-shaped nanoparticles, being different in shape from conventional nanoparticles basically with the spherical shape, are highly promising in respect with joining or the like in a specific crystal orientation on solid substrate surfaces. Further, the metal nanoparticles which are joined readily on the oxide nanoparticle can be immediately used as electrodes. Owing to the structural features described above, application to nano-scale diodes, resistive switching devices, photoresponsive sensing devices, solar cells and the like can be anticipated. As the metal nanoparticle is mainly formed of a noble metal, it can also acquire catalytic properties originating from a noble metal/oxide interface. Surfaces of particles generated by the production method of the present invention are clean at the atom level, so the present invention also has an advantage of not requiring the removal of contamination due to a chemical substance on the particle surfaces, which is indispensable in liquid-phase synthesis. As described above, the present invention offers a highly promising technique for construction of devices and generation of catalysts in the nanoscale, so that very extensive industrial application can be expected.

### REFERENCE SIGNS LIST

- A: Device for generating alloy nanoparticles
- B: Heater
- C: Collector
- D: Evacuating pump
- 1: Piping (for feeding an inert gas)
- 2: Flow control valve (for feeding an inert gas)
- 3: Heating tube
- 4: Flow control valve (for feeding an oxidizing gas)
- 5: Piping (for feeding an oxidizing gas)
- 6: Piping (for exhaust)
- 7: Pressure control valve
- 8: Piping (for exhaust from an exhausting pump)
- B and 3: Thermal oxidation reactor

## Claims

1. A method of producing a joined structure comprising a cube- or quadratic prism-shaped rock salt-type oxide nanoparticle and a metal nanoparticle, comprising the steps of:
generating, in an inert gas, an alloy nanoparticle, which contains 0.1 to 90 at.% of a noble metal, with the balance being a base metal, which is formable of the rock salt-type oxide, and inevitable impurities, and which has a particle size of 1 to 100 nm; and
heating the alloy nanoparticle and bringing it into contact with a hot oxidizing gas, while the alloy nanoparticle is transported by the inert gas, to oxidize a floating alloy nanoparticle and to allow phase separation into a noble metal-containing metal component and an oxidized base metal component, thereby obtaining the joined structure.

2. The method of producing the joined structure according to claim 1, wherein the alloy nanoparticle further contains a doping element.

3. The method of producing the joined structure according to claim 1 or 2, wherein the joined structure comprising the rock salt-type oxide nanoparticle and the metal nanoparticle is obtained in a dispersed state.

4. The method of producing the joined structure according to any one of claims 1 to 3, wherein thermal oxidation treatment of the alloy nanoparticle is carried out in a gas phase, at a temperature of 600°C or higher and a treatment time not exceeding 10 seconds.

5. The method of producing the joined structure according to any one of claims 1 to 4, wherein an oxidizing gas is introduced while the alloy nanoparticle is heated in the inert gas.

6. The method of producing the joined structure according to any one of claims 1 to 5, wherein any one of a gas evaporation method, a laser ablation method, a sputtering method, an arc plasma method, and an atmospheric pressure plasma method is applied as a method of generating the alloy nanoparticle.

7. The method of producing the joined structure according to any one of claims 1 to 6, wherein the base metal constituting the rock salt-type oxide is at least one selected from among Ni, Co, Mg, Ti, Fe, V, Mn, Ta, Nb, Zr, Ca, Ba, Sr, Cd, Eu, and Sm, and may further contain an element other than these base metals.

8. The method of producing the joined structure according to any one of claims 1 to 7, wherein a metal component of the metal nanoparticle is at least one noble metal selected from among Au, Pt, Pd, Rh, Ag, Ru, and Ir, and may contain a base metal element.

9. A joined structure, in which one or more metal nanoparticles each having a particle diameter of 1 to 50 nm are carried on a surface of a rock salt-type oxide nanoparticle having a cube shape measuring 1 to 100 nm on each side, or a quadratic prism shape measuring 1 to 100 nm on long-side length and having an aspect ratio of less than 10,
wherein the rock salt-type oxide nanoparticle comprises as a base metal component of a rock salt-type oxide thereof at least one selected from among Ni, Co, Mg, Ti, Fe, V, Mn, Ta, Nb, Zr, Ca, Ba, Sr, Cd, Eu, and Sm, and may further contain an element other than these, and wherein the metal nanoparticle comprises as a metal component thereof at least one noble metal selected from among Au, Pt, Pd, Rh, Ag, Ru, and Ir, and may contain the base metal component of the rock salt-type oxide.

10. The joined structure according to claim 9, wherein the rock salt-type oxide in the rock salt-type oxide nanoparticle is NiO or CoO, and wherein the noble metal in the metal nanoparticle is Au or Pt.
